## Europäisches Patentamt

## European Patent Office

## Office européen des brevets

(19)

(11) Publication number: **0 095 459**
**B1**

(12) **EUROPEAN PATENT SPECIFICATION**

(45) Date of publication of patent specification: **05.11.86**

(51) Int. Cl.⁴: **C 01 B 17/00**

(21) Application number: **82900296.3**

(22) Date of filing: **03.12.81**

(86) International application number:
**PCT/US81/01612**

(87) International publication number:
**WO 83/01941 09.06.83 Gazette 83/14**

(54) **PROCESS AND SYSTEM FOR DRY SCRUBBING OF FLUE GAS.**

| | |
|---|---|
| (43) Date of publication of application:<br>**07.12.83 Bulletin 83/49** | (73) Proprietor: **PEABODY PROCESS SYSTEMS, INC.**<br>**835 Hope Street**<br>**Stamford, Connecticut 06907 (US)** |
| (45) Publication of the grant of the patent:<br>**05.11.86 Bulletin 86/45** | (72) Inventor: **BAKKE, Even**<br>**49 Rensselaer Avenue**<br>**Stamford, CT 06901 (US)** |
| (84) Designated Contracting States:<br>**AT DE FR GB NL SE** | (74) Representative: **Warren, Anthony Robert et al**<br>**BARON & WARREN 18 South End Kensington**<br>**London W8 5BU (GB)** |
| (56) References cited:<br>**DE-A-3 034 896**<br>**US-A-3 929 968**<br>**US-A-3 995 005**<br>**US-A-4 081 513**<br>**US-A-4 150 096**<br>**US-A-4 226 831**<br>**US-A-4 273 750**<br>**US-A-4 279 873**<br>**US-A-4 317 806** | |

Courier Press, Leamington Spa, England.

## Description

### Background of the invention
### 1. Field of the invention

This invention relates to the removal of sulfur dioxide and particulate material from boiler flue gases. In particular, this invention relates to a process and system for dry scrubbing desulfurization of flue gases using soda ash, lime, or similar alkali reagents.

### 2. Description of the prior art

The wet scrubbing of boiler flue gases with alkali slurries to remove sulfur dioxide is well known. Although wet scrubbers are effective and have enjoyed wide application, a drawback associated with their use is the difficulty of waste product disposal. That is, the common by-product of the desulfurization of flue gases by wet scrubbing is sludge which may contain up to 50 weight percent water. Sludge requires comparatively expensive disposal means, such as on site settling ponds or costly transportation to remote disposal sites, as well as some stabilization expenses.

In order to overcome this disadvantage of wet scrubbing, it has been proposed to utilize a dry product system in which an atomized solution or slurry of alkali reactant is mixed with flue gas in a spray dryer so that the sulfur dioxide contained in the flue gas is absorbed on the surface of fine drops in the atomized spray and the alkali material reacts with the sulfur dioxide to form sulfite and sulfate compounds. A dry powder mixture of these compounds, with residual unreacted alkali, is formed as a result of the thermal energy of the flue gas. The flue gas, containing a particulate mixture of the reaction products, unreacted alkali and any flyash originally present, exits the spray dryer and is transported to dust removal equipment such as a fabric filter or electrostatic precipitator. The cleaned gas is then exhausted and the particulates are removed from the dust collector hoppers in a dry form for disposal.

It is stated that advantages of dry scrubbers over wet scrubbers include simplicity of operation, lower capital costs for systems, smaller energy demands of operation as well as easier transportation and handling of dry wastes for end product disposal. Environmental requirements may also be more readily met by such systems.

In the articles "Two-State Dry Scrubbers Come of Age Interest Booms, Orders Start Coming In", *Electric Light and Power*, September, 1978, pp. 49—50, and "Tests of a Two-Stage Combined Dry Scrubber/$SO_2$ Absorber Using Sodium or Calcium", *Combustion,* November 1978, pp. 30—43, a dry scrubbing system is described. In that system, boiler flue gas enters a spray dryer where a mist with a dilute reagent solution or slurry is sprayed through the gas. Quick chemical reaction is said to remove a substantial portion of the sulfur dioxide from the flue gas while the heat in the gas evaporates the water and dries the solution to form a dry powder. Flue gas containing the dry powder and flyash leaves the spray dryer and enters either a precipitator or fabric filter dry collector where, it is said, additional reaction of the sulfur dioxide takes place as the flyash and powder are removed from the gas in the collector. The clean gas is then exhausted to a stack while flyash and sulfur dioxide-containing powder particulates are removed from the collector hoppers in dry form for disposal. Among the dry solids recovered are the reagent materials, such as lime, which may be recycled as absorbent feed to the slurry feed tank to be mixed with make-up lime slurry before being atomized in the spray dryer for further use.

The prior art dry scrubbing systems are currently esentially still in the pilot testing stage. *In Fabric Filter Newsletter*, November 10, 1978; No. 37, pp. 3—4, it is stated that 90 percent sulfur dioxide collection may be achieved using either soda ash or lime as a reagent. With soda ash, this level of sulfur dioxide removal is said to be obtained with a stoichiometric ratio of 1.0 to 1.2 while using lime as an absorbent required a stoichiometry of between 2.3 and 3.0 for the same removal efficiency. With recirculation of dried and partially reacted product and flyash from the spray dryer and filter bag house to the feed tank for mixing with make-up lime slurry before being again atomized, lime utilisation is said to be increased with a 90 per cent removal efficiency allegedly being obtained with a stoichiometry in the range of 1.3 to 1.7.

Although the prior art dry scrubbing systems present the inherent advantages that dry scrubbing provides over wet scrubbing, they nevertheless incur high reagent costs due to the high stoichiometric ratios of reagent to sulfur dioxide required to obtain the desired removal efficiency. For example, lime removal efficiencies of 90 per cent are attained only at undesirably low utilisation efficiencies. This is a particular drawback where sulfur contents in coal are high, such as above about 1.4 per cent. Also, where filter bag house, or other dust collector, discharged powder is recycled to the feed tank, the amount of recycle is severely limited by the amount of water which can be used, which is determined by the inlet and outlet temperatures of the spray dryer, and the upper limit of slurry concentration which the spray dryer atomizer can accept.

DE—A—3034896 discloses a process and apparatus for removing corrosive gases such as sulfur dioxide from waste gases wherein the waste gases are spray-dried with an alkaline material such as sodium hydroxide in atomized form. The reaction products and unreacted alkali are collected and removed from the reaction chamber as a dry powder. A proportion of this dry powder is separated and recycled to the spray drying chamber by means of an air stream produced by a blower.

There exists however a need for dry scrubbing processes and systems which possess increased efficiencies and result in reduced reactant costs and, concurrently, decreased waste amounts and reduced disposal costs.

The present invention consists in a process for removing sulfur dioxide from flue gas including the steps of feeding the sulfur dioxide-containing flue gas to a spray dryer, contacting the flue gas with an atomized solution or slurry of alkali reactant in a spray zone in a spray drying chamber to form sulfite and sulfate reaction products, spray drying the solution and formed materials in the spray drying chamber to obtain dry particles, conveying the flue gas and dry particles to a dry particle collector, removing the dry particles in the dry particle collector and recycling a portion of the dry particles recovered in the dry particle collector to the spray drying chamber to bring them into contact with the flue gas therein, characterised in that cleaned hot flue gas is used to convey the recycle particles to the spray drying chamber.

It is possible in this way to obtain an improvement over the dry scrubbing processes and systems now known by achieving higher sulfur dioxide removal efficiency with an improved stoichiometry and thus a better utilisation of alkali reagent chemicals as well as increased dry product recovery performance. The recycled stream is preferably injected into the top of the spray drying chamber until it falls virtually downwards through the spray zone produced by the atomizer.

Several advantages result from the process and system of this invention. These include a higher sulfur dioxide removal efficiency and improved stoichiometry than that obtainable with the known methods. In addition, the amount of recycled powder can be adjusted and the same alkali caused to pass through the spray dryer many times with greatly increased exposure to sulfur dioxide in the flue gas. Thus, the alkali reagent, such as lime, is better utilised so that there is a lower consumption of the chemicals as a consequence of the increased reagent total exposure time. Furthermore, by conveying the recycled powder mixture at relatively high velocity in the conveying pipes, there is a further advantage of a continuous creation of fresh surface area as a consequence of powder fracture and alkali particle attrition and hence an additional lowering of chemical consumption. Another advantage is that most flyash contains alkali such as $CaO$, $MgO$, $Al_2O_3$, $Na_2O$, $K_2O$, and the like. By recycling a large amount of flyash, these alkali will react with sulfur dioxide and, thereby, also reduce the required feed of alkali reagent chemical.

The process and system of this invention have the inherent advantage that temperature control becomes less critical. That is, since a large amount of powder is recycled, the amount of water into the atomizer can be reduced, thereby operating at a higher outlet temperature. This will reduce the chance of making the filter bag in the dust collection baghouse wet. Also, by introducing the recycled dry powder mixture into the slurry droplet zone at the spray dryer, the powder will have a drying effect and the chance of wetting the walls in the spray dryer chamber, and thereby causing particle build-up on the walls, will be significantly reduced.

A further feature of this invention is the provision of a process and system for dry scrubbing of flue gases with spray drying wherein reacted and unreacted reagent alkali and flyash are recycled and directly contact, in the dry state, sulfur dioxide containing gas in the spray dryer chamber.

The process and system of this invention utilize a splitting method and a splitter apparatus wherein the particulate product powder is separated into fractions one of which is recycled and one of which proceeds to product disposal. The rate of splitting is fully adjustable over a wide range.

Thus, another feature of the invention is the provision of a method and apparatus for separating part of the dry product into a recycle stream and a disposal stream.

The foregoing and other features, advantages and objects of this invention will be further apparent from the following description of the preferred embodiments herein taken in conjunction with the accompanying drawings.

Brief description of the drawings

Fig. 1 is an illustration, in schematic form, of an overall system for dry scrubbing of flue gas according to an embodiment of this invention;

Fig. 2 is a rear elevational view of a splitter apparatus for the system according to an embodiment of this invention; and

Fig. 3 is a side view taken along the line 3—3, with a portion broken away for greater clarity, of the splitter apparatus of Fig. 2.

Description of the preferred embodiment

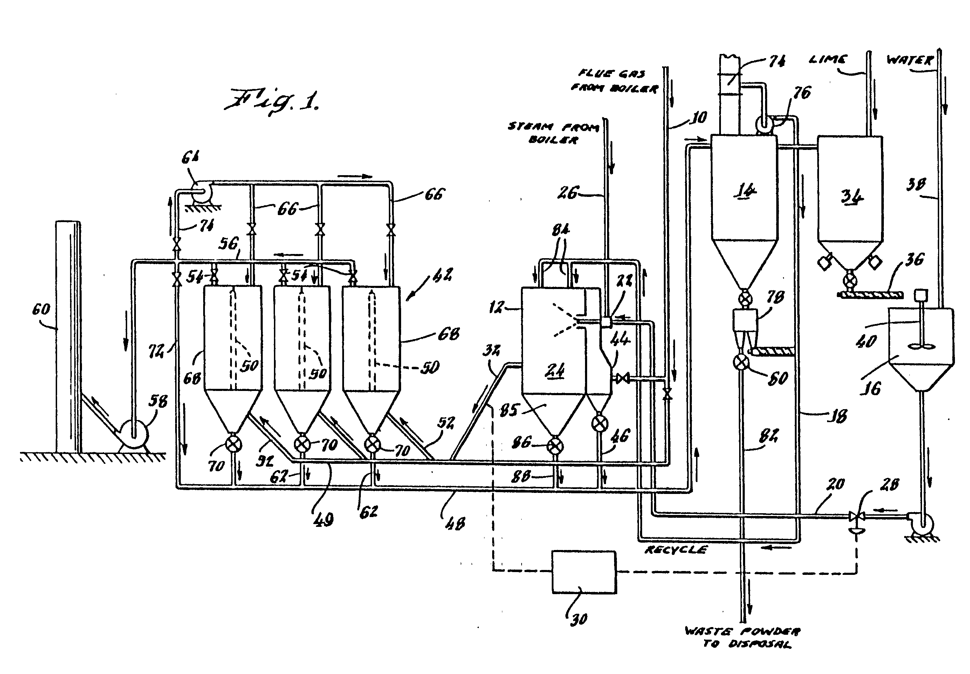

Referring to Fig. 1, there is shown a system for dry scrubbing of flue gas according to a preferred embodiment of this invention. Flue gas from a boiler enters the system through a duct 10 and is transported to a spray dryer 12 where it is contacted with unreacted and recycled alkali. The alkali, in this instance lime, is fed to the spray dryer 12 from the recycle silo 14 and the lime slurry preparation tank 16 through the feed lines 18 and 20, respectively.

Fresh lime slurry from the lime slurry preparation tank 16 is pumped to the spray dryer 12 through the pipe 20 to an atomizing nozzle 22 and into a spray drying chamber 24. Steam from the boiler also enters the atomizing nozzle 22, through the pipe 26, and breaks up the lime slurry into small droplets. The rate of fresh lime slurry feed is controlled by a valve 28 which is controlled by a temperature controller 30 which senses temperature in the duct 32 exiting the spray dryer 12.

Fresh lime slurry is prepared in the lime slurry preparation tank 16 by feeding lime from the lime storage silo 34 through the metering lime feed screw conveyor 36 to the top of the lime slurry preparation tank 16. Water is added to the dry lime powder through the pipe 38 and the two mixed by means of the stirrer 40.

Sulfur dioxide in the flue gas is absorbed on the surface of the lime slurry droplets which form as a dispersed spray of fine alkali slurry containing droplets as a result of the atomizing nozzle 22. The sulfur dioxide reacts with the lime in the droplets, in the spray drying chamber 24, to form calcium sulfites and calcium sulfates. At the same time, the heat of the flue gas evaporates the water in the droplets to produce a dry powder mixture of those reaction products and of unreacted lime. As the slurry droplet water evaporates the flue gas temperature is reduced.

The flue gas, which now contains a mixture of particulate solids including the reaction products, unreacted lime, and flyash which may remain present, exits the spray dryer 12 through the duct 32 and is transported to a dust collection system referred to generally at 42. Some of the particulate solids fall out in the hopper 84 of the spray drying vessel 12 and some in the hopper near the point where the flue gas enters the spray drying chamber 24, shown at 44, and collect in the bottom of the spray drying vessel 12 as flyash and other solids from whence they are removed through the discharge lines 46 and 88 to enter the solids conveying line 48.

The flue gas and particulate solids stream leaves the spray dryer 12 through the duct 32 and enters the dust collection system 42 where a manifold 49 distributes the stream to fabric filters 50 through inlet conduits 52. The filtered flue gas exits the filter through the conduits 54, enters the outlet manifold 56 and passes to the main ID fan 58 and from there to the stack 60 where it is exhausted as clean flue gas to the atmosphere. The particulate solids removed by the fabric filters 50 are collected and are discharged through the discharge lines 62 which feed them to the solids conveying line 48.

The particulate solids, or dust, collected on the fabric filters 50, in this instance filter bags, are removed by reversing the gas flow through the filter bags with the help of a blower 64 and reverse ducting 66 utilizing the cleaned flue gas. The powder dust falls into the hoppers of filter 68 and is removed by rotary valves 70 to the discharge lines 62.

The powder dust from the collection system 42 is conveyed through the line 48 to the storage silo 14. The gas for the conveying is cleaned hot flue gas which is extracted from the outlet duct 56 of the dust collection system 42 and is split into a stream, 72, for conveying the solids and a stream, 74, for reverse gas flow through the filter bags 50. The use of hot flue gas helps prevent water condensation in the line 48 and ducts 66.

The solids conveying line 48, which also receives solid particulates from the spray dryer 12 through the discharge lines 46 and 88, conveys material to the top of the storage silo 14. The silo 14 is ventilated with a small dust collector 74 and a fan 76 which further transports the hot conveying gas downwards in the duct 18. A splitter apparatus 78 is located at the bottom of the storage silo 14.

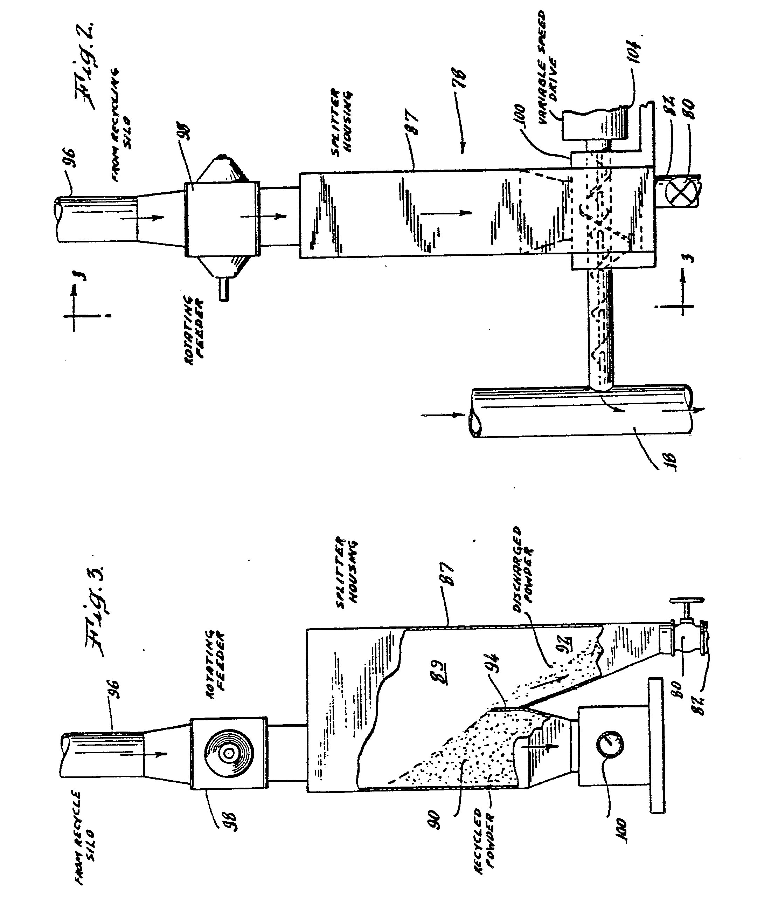

The splitter apparatus 78, described in greater detail below with reference to Figs. 2 and 3, divides the solid particulates in the storage silo 14 into two streams, one of which is injected as recycle powder into the duct 18 and the other of which is removed from the system by the rotary valve 80 and the waste conduit 82 for disposal.

The recycled powder injected into the duct 18 is conveyed by the conveying gas to the top of the spray dryer 12 where it is injected down into the zone of the spray drying chamber 24 by injector pipes 84 located such that the recycled powder is well distributed across the spray drying chamber. The recycled powder falls downward through the spray drying chamber 24 where it is contacted by the flue gas and further sulfur dioxide within the flue gas is absorbed on the unreacted alkali within the recycled powder. A part of the recycled powder will fall into the hopper portion 84 of the spray dryer 12 to be removed therefrom through the rotary valve 86 and the discharge line 88 for feed into the solids conveying line 48. The remaining part of the recycled powder exits the spray dryer with the flue gas through the conduit 32 and is removed therefrom in the dust collection system 42.

The flue gas, pressurized by fan 76, conveys the recycled powder from the silo 14 in the duct 18 at relatively high velocities as a consequence of which the recycled powder fractures and new surfaces are exposed to form reaction sites when it is recycled back into the spray drying chamber 24.

The splitter apparatus 78 for dividing the solid particulates or powder in the storage silo 14 into two streams is shown in greater detail in Figs. 2 and 3. The splitter apparatus 78 includes a housing 86 which forms an internal compartment 88, the lower portion of which is divided into sections 90 and 92 by means of an internal partial upright wall 94. The splitter compartment 88 receives feed from the silo 14 through the conduit 96 by means of a feeding apparatus such as a rotating dust feeder 98 illustrated. Inside the compartment 88, the particulate solids collect in section 90 and overflow wall 94 into section 92 to constitute recycle powder or waste discharge powder, respectively.

The recycle powder in splitter section 90 is fed into a screw feeder 100 which feeds the recycle powder into the recycle duct 18 where it is propelled by the cleaned hot flue gas pumped from the recycle silo fan 76 as feed to the spray dryer vessel 12. Powder collected in splitter section 92 is discharged to the discharge line 82 by the rotary dust valve 80 for collection in a waste storage silo or other disposal.

The rate of splitting is fully adjustable over a wide range by adjusting the rate of speed of the feed screw 100 through the variable speed drive 104. By adjusting this splitting rate, the amount of recycled powder is adjusted. Typically, the amount of recycled powder can be 10 times the amount of flyash and alkali powder that enters the process originally. As a result, the same alkali is caused to pass through the spray dryer 12 many times and, thereby, its exposure time to the sulfur dioxide in the flue gas is greatly increased.

Those skilled in the art, given the teaching herein, will be able to design the system and process having specific process parameters of gas flow rates, power rates, temperatures, concentrations and equipment types and sizes, depending on the boiler rating, sulfur dioxide concentration in the flue gas and the emission standards desired to be met. It is to be understood that such specific process parameters as well as equipment design characteristics and arrangements are within contemplation of this invention. For example, although the dust collection system utilizes filter bags which are preferred because baghouse operation and performance are generally less sensitive to inlet loading dust, electrostatic precipitation could also be successfully employed. Accordingly, there have been disclosed a system and process for the removal of sulfur dioxide and particulate material from boiler and flue gases utilizing dry scrubbing wherein a portion of the collected solids are recycled in an efficient and advantageous manner.

## Claims

1. A process for removing sulfur dioxide from flue gas including the steps of feeding the sulfur dioxide-containing flue gas to a spray dryer (12) contacting the flue gas with an atomized solution or slurry of alkali reactant in a spray zone in a spray drying chamber (24) to form sulfite and sulfate reaction products, spray drying the solution and formed material in the spray drying chamber (24) to obtain dry particles, conveying the flue gas and dry particles to a dry particle collector (42), removing the dry particles in the dry particle collector and recycling a portion of the dry particles recovered in the dry particle collector to the spray drying chamber to bring them into contact with the flue gas therein, characterised in that cleaned hot flue gas is used to convey the recycled particles to the spray drying chamber.

2. The process as claimed in claim 1, wherein the recycled dry particles are introduced into the top of the spray dryer chamber (24) and fall vertically downward through the spray zone therein.

3. The process as claimed in claim 1 or claim 2, wherein the alkali reactant is lime.

4. The process as claimed in any preceding claim, wherein the recycled dry particles are conveyed to the spray drying chamber at a velocity sufficiently high to cause attrition with creation of fresh particle surface area.

5. The process as claimed in any preceding claim wherein the dry particles removed in the dry collector (42) are conveyed to a storage silo (14) using clean hot flue gas as the motive fluid, transported from the storage silo to a splitter apparatus (78) and separated thereby into a recycle stream (18) and a disposal stream (82).

6. A process according to any preceding claim, wherein the flue gas contains flyash particles which are collected in the dry particle collector.

7. A process according to any preceding claim wherein the weight of dry particles recycled to the spray drying chamber is approximately 10 times the weight of flyash and alkali powder entering the process initially.

8. A system for dry scrubbing of flue gas containing sulfur dioxide comprising a spray dryer (12) and a dust particle collector (42), means (10, 32, 49, 52) for conveying the flue gas through the spray dryer and collector, atomizing means (22) for feeding a mist of alkali reagent to the spray dryer (12), means (64, 66, 70) for removing a stream of particles suspended in clean hot flue gas from the dust collector, means (62, 48, 14) for transporting particles to a splitter apparatus (78) for separation into two streams, means (76, 18, 84) for transporting one of the separated streams to the spray dryer (12) and means for transporting the other separate stream to disposal discharge storage, characterised in that the means for transporting particles to the splitter apparatus comprises a conduit (72) branched from an outlet duct (56) for cleaned flue gases from the dust collector (42), and arranged to convey a stream of cleaned flue gases to the splitter apparatus, and a discharge line (62) arranged to feed particles from the collector (42) into the conduit (72) to be conveyed by the flue gas stream to the splitter apparatus.

9. A system according to claim 8 wherein the splitter apparatus (78) comprises a housing (87) defining an internal compartment (89), partially upright wall means (94) within the compartment dividing the compartment into a recycle particle section (90) and a discharge particle section (92), means (98) for feeding particle solids to the compartment, means (100) for removing solid particles from the recycle section and means (80, 82) for removing solid particles from the discharge section.

10. A system according to claim 9 further comprising a screw feeder (100) for feeding recycle solid particles to the spray dryer (12).

11. A system according to any one of claims 8 to 10, wherein a spray zone is located within the spray dryer (12) for contacting the flue gas directly with the recycled solid particles.

## Patentansprüche

1. Verfahren zum Entfernen von Schwefeldioxyd aus Abzugsgas, bestehend aus dem Zuführen von Schwefeldioxyd enthaltendem Gas zu einem Sprühtrockner (12), in dem das Abzugsgas mit einer zerstäubten Lösung oder mit einem Schlamm aus alkalischem Reagenzstoff in einer Sprühzone innerhalb einer Sprühtrocknungskammer (24) kontaktiert wird, um Sulfit- und Sulfatreaktionsprodukte zu bilden, aus dem Sprühtrocknen der Lösung und des gebildeten Materials in der Sprühtrocknungskammer (24), um trockene Partikel zu erhalten, aus dem Fördern des Abzugsgases und der trockenen Partikel zu einem Sammler (42) für trockene Partikel, aus dem Entfernen der trockenen Partikel in dem Sammler und dem Zurückführen eines Anteils der in dem Sammler gewonnenen Partikel zu der Sprühtrocknungskammer, um sie mit dem darin befindlichen Abzugsgas in Kontakt zu bringen, dadurch gekennzeichnet, daß gereinigtes heißes Abzugsgas verwendet wird, um die zu der Sprühtrocknungskammer zurückgeführten Partikel zu fördern.

2. Verfahren nach Anspruch 1, dadurch gekennzeichnet, daß die zurückgeführten Partikel in den Oberbereich der Sprühtrocknungskammer (24) eingeführt werden und vertikal nach unten durch die darin befindliche Sprühzone hindurchfallen.

3. Verfahren nach Anspruch 1 oder 2, dadurch gekennzeichnet, daß der alkalische Reagenzstoff aus Kalk besteht.

4. Verfahren nach den Ansprüchen 1 bis 3, dadurch gekennzeichnet, daß die zurückgeführten Partikel mit einer solchen Geschwindigkeit zu der Sprühtrocknungskammer gefördert werden, die zur Veranlassung von Abbau bei Erzeugung neuer Partikelflächenbereiche ausreichend hoch ist.

5. Verfahren nach Anspruch 1 bis 4, dadurch gekennzeichnet, daß die in dem Trocknungssammler (42) entfernten Partikel zu einem Speichersilo (14) gefördert werden, wobei ein Abzugsgas als Treibfluid verwendet wird, das von dem Speichersilo zu einer Aufteilungseinrichtung (78) transportiert und durch diese in einen Rückführungsstrom (18) und in einen Aussonderungsstrom (82) aufgeteilt wird.

6. Verfahren nach den Ansprüche 1 bis 5, dadurch gekennzeichnet, daß das Abzugsgas Flugasche-Partikel enthält, die in dem Trocknungssammler gesammelt werden.

7. Verfahren nach den Ansprüchen 1 bis 6, dadurch gekennzeichnet, daß das Gewicht der trockenen Partikel, die zu der Sprühtrocknungskammer zurückgeführt werden, annähernd das Zehnfache des Gewichtes von Flugasche und Alkalipulver beträgt, die am Beginn des Verfahrens zugesetzt werden.

8. System für die Trockenreinigung von Schwefeldioxyd enthaltendem Abzugsgas, bestehend aus einem Sprühtrockner (12), aus einem Staubpartikelsammler (42), aus Mitteln (10, 32, 49, 52) zum Fördern von Abzugsgas durch den Sprühtrockner und durch den Sammler, aus Sprühmitteln (22) zum Einführen eines Nebels aus alkalischem Reagenzstoff in den Sprühtrockner (12), aus Mitteln (62, 66, 70) zum Entfernen eines Stromes aus in einem sauberen heißen Abzugsgas fein verteilten Partikeln aus dem Staubsammler, aus Mitteln (62, 48, 14) zum Transportieren von Partikeln zu einer Aufteilungseinrichtung (78) zum Aufteilen in zwei Partikelströme, aus Mitteln (76, 18, 84) zum Transportieren des einen abgeteilten Stromes zu dem Sprühtrockner (12) und des anderen abgeteilten Stromes zu einem Absonderungsspeicher, dadurch gekennzeichnet, daß die Mittel zum Transportieren der Partikel zu der Aufteilungseinrichtung aus einer Rohrleitung (72), die von einer Leitung (56) für gereinigtes Abzugsgas von dem Staubsammler (42) abgezweigt und zum Fördern eines Stromes aus gereinigtem Abzugsgas zu der Aufteilungseinrichtung angeordnet ist, und aus einer Austragleitung (62) bestehen, die zum Zuführen von Partikeln von dem Sammler (42) in die Rohrleitung (72) angeordnet ist, um die Partikel mittels des Abzugsgases zu der Aufteilungseinrichtung zu fördern.

9. System nach Anspruch 8, dadurch gekennzeichnet, daß die Aufteilungseinrichtung (78) ein Gehäuse (87), das eine innere Kammer (89) bildet, eine teilweise aufrechte Wand (94) in der Kammer, die die Kammer in einen Partikelrückführungsbereich (90) und in einem Partikelaustragbereich (92) aufteilt, Mittel (98) zum Zuführen fester Partikel zu der Kammer, Mittel (100) zum Entfernen der festen Partikel aus dem Rückführungsbereich und Mittel (80, 82) zum Entfernen fester Partikel aus dem Austragbereich umfaßt.

10. System nach Anspruch 9, dadurch gekennzeichnet, daß es weiter einen Schneckenförderer (100) zum Zuführen fester Rückführungs-Partikel zu dem Sprühtrockner (12) umfaßt.

11. System nach den Ansprüchen 8 bis 10, dadurch gekennzeichnet, daß in dem Sprühtrockner (12) eine Sprühzone zum direkten Kontaktieren des Abzugsgases mit den zurückgeführten festen Partikeln vorgesehen ist.

## Revendications

1. Procédé d'élimination de l'oxyde sulfureux des gaz de fumée comprenant les opérations d'introduction du gaz du fumée contenant de l'oxyde sulfureux à un sécheur à pulvérisation (12); de mise en contact des gaz de fumée avec une solution atomisée ou une bouillie d'un réactif alcalin dans une zone de pulvérisation d'une chambre de séchage par pulvérisation (24) pour former du sulfite et du sulfate, comme produits de réaction; de séchage par pulvérisation de la solution et des matières formées dans la chambre de séchage par pulvérisation (24) afin d'obtenir des particules sèches; d'acheminement des gaz de fumées et des particules sèches vers un collecteur de particules sèches (42); d'élimination des particules sèches du collecteur de particules sèches et de recyclage d'une portion des particules sèches récupérées dans le collecteur de particules sèches vers la chambre de séchage par pulvérisation afin de les amener en contact avec les gaz de fumée contenus dans cette chambre, caractérisé en ce que les gaz de fumée chauds propres sont utilisés pour acheminer les particules recyclées vers la chambre de séchage par pulvérisation.

2. Procédé selon la revendication 1, dans lequel les particules sèche recyclées sont introduites par le haut de la chambre de séchage par pulvérisation (24) et tombent verticalement vers le bas en traversant la zone de vaporisation de cette chambre.

3. Procédé selon la revendication 1 ou 2, dans lequel le réactif alcalin est la chaux.

4. Procédé selon l'une quelconque des revendications précédentes, dans lequel les particules sèches recyclées sont acheminées vers la chambre de séchage par pulvérisation à une vitesse suffisamment élevée pour provoquer une usure par frottement avec création d'une zone de surface nouvelle des particules.

5. Procédé selon l'une quelconque des revendications précédentes, dans lequel les particules sèches retirées du collecteur de particules sèches (42) sont acheminées vers un silo de stockage (14) en utilisant les gaz du fumée chauds et propres, comme fluide moteur, transportées du silo de stockage vers un appareil séparateur (78) et séparées dans cet appareil en un flux de recyclage (18) et un flux à éliminer (82).

6. Procédé selon l'une quelconque des revendications précédentes, dans lequel les gaz de fumée contiennent des particules de cendres volantes qui sont collectées dans le collecteur de particules sèches.

7. Procédé selon l'une quelconque des revendications précédentes, dans lequel le poids des particules sèches recyclées et introduites dans la chambre de séchage par pulvérisation est environ dix fois supérieur au poids des cendres volantes et de la poudre alcaline entrant à l'origine dans le procédé.

8. Système pour épuration à sec des gaz de fumée contenant de l'oxyde sulfureux comprenant un sécheur par pulvérisation (12) et un collecteur de particules de poussière (42), des moyens (10, 32, 49, 52) pour acheminer les gaz de fumée au travers du sécheur par pulvérisation et du collecteur, des moyens d'atomisation (22) pour appliquer un brouillard de réactif alcalin au sécheur par pulvérisation (12), des moyens (64, 66, 70) pour retirer un flux de particules en suspension dans les gaz du fumée chauds et propres du collecteur de poussière, des moyens (62, 48, 14) pour transporter des particules vers un appareil séparateur (78) afin de les séparer en deux flux, des moyens (76, 18, 84) pour transporter l'un des flux séparé jusqu'au sécheur par pulvérisation (12) et des moyens pour transporter l'autre flux séparé vers un stockage de produits à éliminer, caractérisé en ce que les moyens pour transporter les particules jusqu'à l'appareil séparateur comprennent un conduit (72) branché en dérivation d'un conduit de sortie (56) des gaz de fumée nettoyés venant du collecteur de poussière (42) et agencé dans le but d'acheminer un flux de gaz de fumée propres vers l'appareil séparateur, et un conduit de sortie (62) agencé dans le but d'apliquer des particules venant du collecteur (42) dans le conduit (72) afin qu'elles soient acheminées par le flux des gaz de fumée jusqu'à l'appareil séparateur.

9. Système selon la revendication 8, dans lequel l'appareil séparateur (78) comprend un coffre (87) définissant un compartiment interne (89), des moyens de cloisons verticales partielles (94) à l'intérieur du compartiment divisant le compartiment en une section pour particules à recycler (90) et une section pour particules à éliminer (92), des moyens (98) pour introduire des particules solides au compartiment, des moyens (100) pour éliminer des particules solides de la section de recyclage et des moyens (80, 82) pour éliminer des particules solides de la section d'élimination.

10. Système selon la revendication 9, comprenant en outre un convoyeur à vis (100) pour alimenter le sécheur par pulvérisation (12) en particules solides recyclées.

11. Système selon l'une quelconque des revendications 8 à 10, dans lequel une zone de pulvérisation est située à l'intérieur du sécheur par pulvérisation (12) afin de mettre en contact directement les gaz de fumée avec les particules solides recyclées.

Fig. 1.

WATER

LIME

FLUE GAS FROM BOILER

STEAM FROM BOILER

RECYCLE

WASTE POWDER TO DISPOSAL

**Fig. 3.**

FROM RECYCLE SILO

96

98 — ROTATING FEEDER

SPLITTER HOUSING

90 — 89 — 87

RECYCLED POWDER

94

DISCHARGED POWDER

92

100

80

82

**Fig. 2.**

3

96

FROM RECYCLING SILO

ROTATING FEEDER — 98

SPLITTER HOUSING

87

78

18

100 — VARIABLE SPEED DRIVE

104

3

82

80

0 095 459